# EUROPEAN PATENT APPLICATION

(11) **EP 4 397 641 A1**
(43) Date of publication of application: **10.07.2024**
(21) Application number: 22864000.9
(22) Date of filing: 16.06.2022
(51) Int. Cl.: C04B 35/465, C01G 23/00, C01G 25/00, C01G 27/00, C04B 35/48

(54) **PEROVSKITE-TYPE CERAMIC COMPACT AND METHOD FOR MANUFACTURING SAME**

(30) Priority: 31.08.2021 JP 2021141254
(71) Applicant: National Institute of Advanced Industrial Science and Technology, Chiyoda-ku Tokyo 100-8921 (JP)
(72) Inventor: YAMAGUCHI Yuki, Nagoya-shi, Aichi 463-8560 (JP); SHIMADA Hiroyuki, Nagoya-shi, Aichi 463-8560 (JP); NOMURA Katsuhiro, Nagoya-shi, Aichi 463-8560 (JP); SHIN Woosuck, Nagoya-shi, Aichi 463-8560 (JP); MIZUTANI Yasunobu, Nagoya-shi, Aichi 463-8560 (JP); SUMI Hirofumi, Nagoya-shi, Aichi 463-8560 (JP)
(74) Representative: TBK
(86) International application number: PCT/JP2022/024122
(87) International publication number: WO 2023/032412

(57) **Abstract**

The invention is a method for producing a perovskite-type ceramic compact consisting of a perovskite-type ceramic having an alkaline earth metal element, at least one element selected from Ti, Zr, and Hf, and oxygen element, and is characterized by comprising a contact reaction process in which a precursor compact comprising singly a gel including water and an oxide of at least one element selected from Ti, Zr, and Hf, and a liquid containing a hydroxide of the alkaline earth metal element are brought into contact with each other.

## Description

### TECHNICAL FIELD

The present invention relates to a dense perovskite-type ceramic compact, a method for producing the same, and a raw material for a precursor compact used in the production of the perovskite-type ceramic compact.

### BACKGROUND ART

Perovskite-type composite oxides such as barium titanate, barium zirconate, strontium zirconate, and barium calcium zirconate titanate are known as a piezoelectric material, a dielectric material, and the like suitable for electric equipment, electronic products, and the like. The members disposed on these products are preferably formed of a high-density sintered body to sufficiently exhibit the performance. Such a sintered body (sintered compact) has been conventionally produced by mixing powder or particles of a composite oxide with a binder as necessary, forming a compact having a predetermined shape, and then subjecting the compact to a heat treatment at a high temperature of, for example, 1700°C (in the case of barium zirconate).

Since the production conditions at a high temperature as described above are not economically preferable because a large amount of heat energy is required, a method capable of producing a sintered compact composed of a perovskite-type composite oxide at, for example, 200°C or lower has been required.

For example, Non Patent Literature 1 discloses a method for producing a barium zirconate sintered compact, in which the surfaces of particles of barium zirconate are coated with a zirconia gel, the obtained composite particles are then press-molded to form a compact having a predetermined shape, and the compact is then immersed in a saturated aqueous solution of barium hydroxide at a temperature of 75°C.

### CITATIONS LIST

Non Patent Literature 1: Yuki Yamaguchi, J. Ceram. Soc. Jpn., 128 [10] (2020) 747-755

### SUMMARY OF INVENTION

### TECHNICAL PROBLEMS

An object of the present invention is to provide a method for producing a dense perovskite-type ceramic compact having a relative density of 60% or higher. Another object of the present invention is to provide a raw material for a precursor compact used in the suitable production of a perovskite-type ceramic compact. Further, another object of the present invention is to provide a perovskite-type ceramic compact suitable for an electrolyte or the like of a solid oxide fuel cell due to its high density.

In the present invention, the relative density of the perovskite-type ceramic is a ratio of the measured density to the theoretical density (6.117 g/cm³ in the case of barium zirconate) obtained by X-ray diffraction measurement and Rietveld analysis. The relative density of an oxide hydrous gel is a ratio of the measured density to the apparent density of the oxide hydrous gel particles (3.869 g/cm³ in the case of zirconia gel) measured by the Archimedes' method. The measured density (hereinafter, also simply referred to as "density") is a bulk density measured by a dimension method.

### SOLUTIONS TO PROBLEMS

The inventors of the present invention have found that a dense perovskite-type ceramic compact having high relative density can be obtained by using only a zirconia gel, that is, particles formed of a gel containing at least one oxide selected from Ti, Zr, and Hf, rather than using the composite particles (that are particles obtained by coating the surfaces of barium zirconate particles with a zirconia gel) described in Non Patent Literature 1.

The present invention is as follows.
(1) A method for producing a perovskite-type ceramic compact consisting of a perovskite-type ceramic comprising an alkaline earth metal element, at least one element selected from Ti, Zr, and Hf, and oxygen element, characterized by comprising a contact reaction process in which a precursor compact comprising singly a gel including water and an oxide of at least one element selected from Ti, Zr, and Hf, and a liquid comprising a hydroxide of the alkaline earth metal element are brought into contact with each other.
(2) The method for producing a perovskite-type ceramic compact according to (1) above, wherein the gel is amorphous.
(3) The method for producing a perovskite-type ceramic compact according to (1) or (2) above, wherein the precursor compact is a green compact containing particles consisting of the gel.
(4) The method for producing a perovskite-type ceramic compact according to any one of (1) to (3) above, wherein the precursor compact is a green compact of a mixture of particles consisting of the gel and particles consisting of the perovskite-type ceramic.
(5) A perovskite-type ceramic compact characterized in that an aggregate of perovskite-type ceramic crystals comprising an alkaline earth metal element, at least one element selected from Ti, Zr, and Hf, and oxygen element forms a domain, and the compact comprises a portion formed by connecting a plurality of the domain, the perovskite-type ceramic compact having a relative density of 60% or higher.
(6) The perovskite-type ceramic compact according to (5) above, wherein a plurality of the perovskite-type ceramic crystals oriented in a same direction are included in the domains.
(7) A raw material for a precursor compact used in the method for producing a perovskite-type ceramic compact according to any one of (1) to (4) above, characterized by comprising particles consisting of a gel including water and an oxide of at least one element selected from Ti, Zr, and Hf.
(8) The raw material for a precursor compact used in the method for producing a perovskite-type ceramic compact according to (7) above, wherein the gel is amorphous.
(9) The raw material for a precursor compact used in the method for producing a perovskite-type ceramic compact according to (7) or (8) above, wherein an volume average particle diameter of the gel particles is in a range from 0.05 to 10 µm.

### ADVANTAGEOUS EFFECTS OF INVENTION

The present invention can efficiently and economically produce a dense perovskite-type ceramic compact in which a crystal (perovskite-type ceramic crystal) composed of a desired perovskite-type oxide is contained at a high density (relative density of 60% or higher) without performing the contact reaction process in a high-temperature condition of, for example, 1000°C or higher, that is, without requiring a large amount of thermal energy. In a preferred embodiment, the relative density can be 80% or higher.

According to the present invention, the above-described dense perovskite-type ceramic compact can be suitably used for a dielectric for a ceramic capacitor, an electrolyte for a solid oxide fuel cell, an electrolyte for a gas sensor, an electrode or an electrolyte for an all-solid-state battery, a photocatalyst electrode, and the like.

### BRIEF DESCRIPTION OF DRAWINGS

Fig. 1 is a schematic view illustrating an example of the crystal structure of a perovskite-type ceramic compact of the present invention.
Fig. 2 is a schematic view illustrating another example of the crystal structure of the perovskite-type ceramic compact of the present invention.
Fig. 3 is a graph illustrating a particle size distribution of raw material particles X1 used in EXAMPLES.
Fig. 4 is a graph illustrating a particle size distribution of raw material particles X2 used in EXAMPLES.
Fig. 5 is an SEM image of a precursor compact P1 used in Experimental Example 1.
Fig. 6 is an SEM image of a perovskite-type ceramic compact Q1 obtained in Experimental Example 1.
Fig. 7 is an enlarged image of Fig. 6.
Fig. 8 is a high magnification FE-SEM image of the perovskite-type ceramic compact Q1 obtained in Experimental Example 1.
Fig. 9 is an enlarged image of Fig. 8.
Fig. 10 is a diagram of a crystal orientation map of the perovskite-type ceramic compact Q1 obtained in Experimental Example 1.
Fig. 11 is a graph illustrating relative densities of perovskite-type ceramic compacts Q1 to Q8 obtained in Experimental Examples 1 to 8.
Fig. 12 is an SEM image of a perovskite-type ceramic compact Q8 obtained in Experimental Example 8.
Fig. 13 is an SEM image of a precursor compact P2 used in Experimental Example 9.
Fig. 14 is an SEM image of a perovskite-type ceramic compact R1 obtained in Experimental Example 9.
Fig. 15 is an SEM image of a precursor compact P10 used in Experimental Example 12.
Fig. 16 is an SEM image of a perovskite-type ceramic compact S1 obtained in Experimental Example 12.
Fig. 17 is an enlarged image of Fig. 16.
Fig. 18 is an X-ray diffraction pattern of a perovskite-type ceramic obtained in Experimental Example 13.

### DESCRIPTION OF EMBODIMENT

In the present invention, a perovskite-type ceramic is an oxide including an alkaline earth metal element, at least one element selected from Ti, Zr, and Hf, and oxygen element, the perovskite-type ceramic being represented by a general formula M¹M²O₃ (wherein M¹ is an alkaline earth metal element, and M² is at least one element selected from Ti, Zr, and Hf). The alkaline earth metal element M¹ is preferably Ca, Sr, and Ba.

The production method of a perovskite-type ceramic compact in the present invention includes a contact reaction process in which a precursor compact comprising singly a gel including an oxide of at least one element selected from Ti, Zr, and Hf, and a liquid comprising a hydroxide of the alkaline earth metal element are brought into contact with each other. The production method may include, if necessary, a post-treatment process (described later).

The precursor compact used in the contact reaction process is an article containing the gel alone. The phrase "comprising singly a gel" does not mean "consisting only of a gel" not containing other components, and the phrase is intended to exclude a composite containing other components that do not have a configuration of "comprising singly a gel" as a result of obtaining the composite by dispersing the other components in the gel as a matrix. Thus, the precursor compact according to the present invention is an article that essentially contains the gel and may contain other components. In the present invention, a precursor compact of a preferred embodiment is a green compact obtained by press-molding a raw material (meaning another invention that is "raw material for a precursor compact used in the production of the perovskite-type ceramic compact" of the present invention, hereinafter, referred to as "precursor raw material") containing a particulated gel (hereinafter, referred to as "particles formed of gel" or "gel particles"). The gel is preferably amorphous from a viewpoint of the formability of a compact densified by the crystals of the perovskite-type ceramic. In addition, the gel is usually composed of a material represented by a general formula M²O₂·nH₂O (n is a positive number).

The shape of the gel particle is not particularly limited, and it may be, for example, spherical shape (including substantially spherical shape), oval sphere shape, linear shape, plate shape, or the like. The shapes of the gel particles contained in the precursor raw material and the precursor compact are not necessarily uniform in all the particles, and the shape may be only one type or two or more types.

The size of the gel particles is not particularly limited. The maximum length is preferably 100 µm, and more preferably 1 µm since a precursor compact having high density is obtained. However, the minimum length is preferably 1 nm, and more preferably 30 nm. In the case of spherical gel particles, the volume average particle size measured by a laser diffraction method is preferably in a range from 0.01 to 10 µm, and more preferably from 0.05 to 1 µm.

The precursor raw material may be formed of gel particles, or formed of gel particles and other components. In the latter case, the other components preferably include an inorganic compound that is not denatured by a liquid containing a hydroxide of an alkaline earth metal element. Examples of the inorganic compound include an oxide, a sulfide, a carbide, a nitride, an alkali-resistant metal, or the like. It is preferably an oxide, more preferably a perovskite-type ceramic, and particularly preferably a perovskite-type ceramic to be produced. The other components may be either crystalline or amorphous. In addition, the shape and size of the other components are preferably the above-described shape and size for the gel particles.

When the precursor raw material is formed of gel particles and other components, the lower limit of the content ratio of the gel particles is preferably 30% by mass, and more preferably 50% by mass with respect to 100% by mass of the total mass of the precursor raw material.

When the green compact (precursor compact) is produced by press molding, the press molding is preferably conducted at a temperature of 10°C or higher and lower than 150°C to prevent denaturation of the gel. The press molding may be performed by appropriately selecting a method for achieving high density according to the shape of the precursor compact. In the present invention, for example, a method of performing uniaxial molding and cold isostatic molding (CIP) in this order may be applied. When press molding using the gel particles is performed, the gel particles are plastically deformed, and the precursor compact can be densified.

The relative density of the green compact (precursor compact) is preferably in a range from 45% to 75%, and more preferably from 60% to 75%.

In the contact reaction process according to the present invention, a liquid containing a hydroxide of an alkaline earth metal element is used. Examples of the hydroxide include calcium hydroxide, strontium hydroxide, barium hydroxide, and the like. The hydroxide may be contained singly or in combination of two or more types thereof in the liquid.

Examples of the medium contained in the liquid include water, an alcohol containing water, and the like. The liquid may contain other components such as an organic compound as long as the reaction between the hydroxide and the gel constituting the precursor compact is not disturbed.

The liquid is preferably a saturated aqueous solution of a hydroxide of an alkaline earth metal element.

The contact method in the contact reaction process is appropriately selected depending on the shape and size of the precursor compact and is not particularly limited. Examples of the contact method include a method of immersing the precursor compact in the liquid, a method of spraying the liquid onto the precursor compact, a method of applying the liquid to the precursor compact, and the like. Of these methods, a method of immersing the precursor compact in the liquid is preferable since a compact containing a perovskite-type ceramic crystal at a high density can be efficiently obtained.

In a case where the precursor compact is brought into contact with the liquid, the upper limit of the contact temperature is preferably 200°C, more preferably 180°C, and further preferably 160°C, and the lower limit is preferably 20°C, more preferably 50°C, and further preferably 75°C, in order to smoothly proceed the reaction between the hydroxide and the gel contained in the liquid without dissolving the precursor compact, that is, without dissolving the gel contained in the precursor compact.

The contact time between the liquid and the precursor compact is appropriately selected depending on the shape and size of the precursor compact, but is usually 12 hours or longer, and preferably 50 hours or longer.

As described above, the method for producing a perovskite-type ceramic compact of the present invention may include a post-treatment process as necessary after the contact reaction process. Examples of the post-treatment process include a cleaning process for removing the excessive liquid adhering to the perovskite-type ceramic compact in the contact reaction process, an adjustment process for adjusting the product form to a predetermined shape and size, and a heat treatment process.

In the cleaning process, a method of spraying water, an acetic acid aqueous solution, or the like to the perovskite-type ceramic compact with liquid, or immersing the perovskite-type ceramic compact in water, an acetic acid aqueous solution, or the like, and then drying the perovskite-type ceramic compact may be applied. In a case where the perovskite-type ceramic compact is dried, it can be dried at a temperature ranging preferably from 20°C to 200°C, and more preferably from 70°C to 200°C under normal pressure conditions or under reduced pressure conditions.

In the adjustment process, grinding processing, drilling processing, surface polishing processing, and the like may be performed in order to adjust a product form to a predetermined shape and size.

The heat treatment process may be a process of heating at a temperature of, for example, in a range from 500°C to 1500°C in the air atmosphere for the growth of internal grains constituting the perovskite-type ceramic compact.

The perovskite-type ceramic compact obtained by the method for producing a perovskite-type ceramic compact of the present invention is a dense compact in which crystals composed of a perovskite-type oxide such as barium titanate, barium zirconate, strontium zirconate, barium calcium zirconate titanate, strontium titanate, and strontium hafnate are contained at a high density, and no alkaline earth metal carbonate is contained or produced as a by-product. As described above, a precursor raw material formed of gel particles, or a precursor raw material formed of gel particles and other components may be used, but in any case, the obtained compact is dense. In addition, the relative density, which is the ratio of the measured density to the theoretical density, of the compact obtained by the method for producing a perovskite-type ceramic compact of the present invention is preferably 60% or higher, more preferably 70% or higher, and particularly preferably 80% or higher.

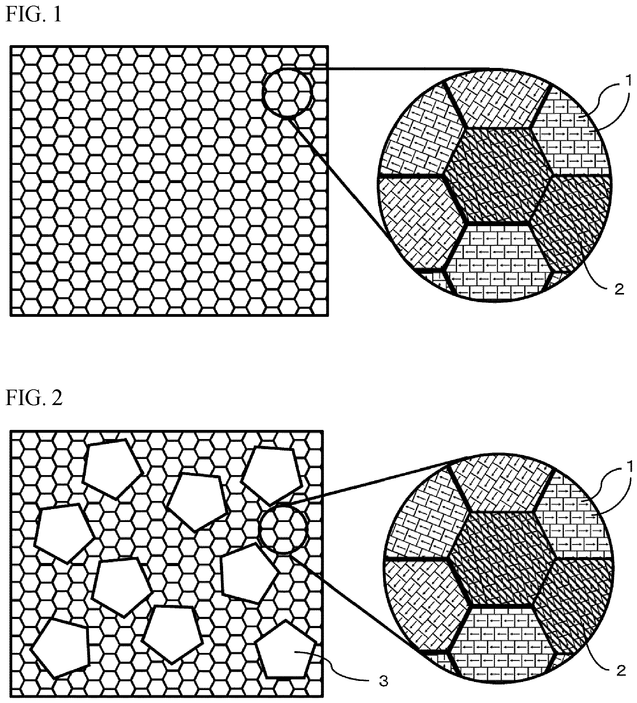

In the perovskite-type ceramic compact of the present invention, as illustrated in Figs. 1 and 2, an aggregate of perovskite-type ceramic crystals 1 (in the figure, only some hexagonal portions are indicated by hatching) forms a domain 2, and a portion in which a plurality of domains 2 are connected is included. Fig. 1 is a schematic view illustrating a crystal structure of a perovskite-type ceramic compact obtained using a precursor compact of a precursor raw material formed of gel particles, and Fig. 2 is a schematic view illustrating a crystal structure of a perovskite-type ceramic compact obtained using a precursor compact of a precursor raw material formed of gel particles and other components. A plurality of crystals included in one domain may be crystals oriented in the same direction as schematically represented by arrows in Figs. 1 and 2. The size of the crystals is preferably in a range from 1 to 200 nm, and more preferably from 10 to 100 nm.

When EBSD analysis using an electron backscatter diffraction method is conducted, it can be confirmed that the perovskite-type ceramic compact of the present invention has a crystal structure including a portion formed by connecting a plurality of domains 2 as illustrated in Figs. 1 and 2. Electrons generated by irradiating the compact with an electron beam are inelastically scattered, diffracted on the crystal lattice planes, and emitted as reflected electrons having a diffraction pattern called an EBSD pattern, and thus the crystal orientation can be obtained by projecting the reflected electrons and indexing the orientation. The orientation of the crystals 1 and the domain 2 formed of an aggregate of the crystals 1 can be confirmed by scanning an electron beam to map an EBSD pattern and obtaining, for example, an inverse pole figure crystal orientation map. It is considered that when the perovskite-type ceramic compact of the present invention has such a structure, variations in ion conduction and polarization directions decrease, and various functions described later improve.

The perovskite-type ceramic compact of the present invention is obtained by the manufacture method of the present invention that does not require a process of setting a temperature to 1500°C or higher at the time of manufacture through typical sintering, that is, does not require a large amount of thermal energy, and can be a compact with a high relative density, and thus it is suitable as a constituent material of a dielectric element, an ion conductive element, an electric conductive element, a piezoelectric element, a ferroelectric element, a ferromagnetic element, a photocatalyst, and the like.

### EXAMPLES

Hereinafter, production examples of the perovskite-type ceramic compact will be described.

### 1. Raw material for producing perovskite-type ceramic compact

The alkaline earth metal hydroxide used for producing compacts and the raw material particles as the raw material for producing precursor compacts are described below.

### (1) Hydroxide of alkaline earth metal

Barium hydroxide octahydrate manufactured by FUJIFILM Wako Pure Chemical Corporation was used.

### (2) Raw material particles X1 and X2

Zirconium oxychloride manufactured by FUJIFILM Wako Pure Chemical Corporation was added to ion-exchanged water, and stirring was conducted to obtain an aqueous solution. Subsequently, ammonia water was added to this aqueous solution, and reacted at room temperature to obtain a reaction product containing an oxide hydrous gel made of ZrO₂·nH₂O. Thereafter, filtration and water washing were performed to remove by-products, and the oxide hydrous gel was recovered. The recovered gel was then dried at a temperature of 150°C for 12 hours to obtain a solidified gel. The solidified gel was evaluated with X-ray diffraction measurement, and no diffraction peak derived from the crystal was observed, and thus, it was found that the solidified gel was amorphous.

The solidified gel was preliminarily pulverized using a pestle and mortar. The preliminarily pulverized material and ethanol were then mixed at a mass ratio of 10:90. The mixed solution and zirconia balls (diameter: 5 mm) having the same volume as the mixed solution were sealed in a polyethylene container. After that, the container was rotated at 150 rpm for 10 hours, the solidified gel was pulverized, and a mixed solution containing a pulverized material (precursor raw material, hereinafter referred to as "raw material particles X1") was recovered. The mixed solution and zirconia balls (diameter: 0.5 mm) having the same volume as the volume of the mixed solution were then sealed in a zirconia pot. The mixture was pulverized at 450 rpm for 3 hours using a planetary ball mill to recover a mixed solution containing pulverized particles. Subsequently, the mixed solution and zirconia balls (diameter: 0.1 mm) having the same volume as the mixed solution were sealed in a zirconia pot. The mixture was pulverized at 450 rpm for 3 hours using a planetary ball mill to obtain a mixed solution containing pulverized particles (precursor raw material, hereinafter referred to as "raw material particles X2").

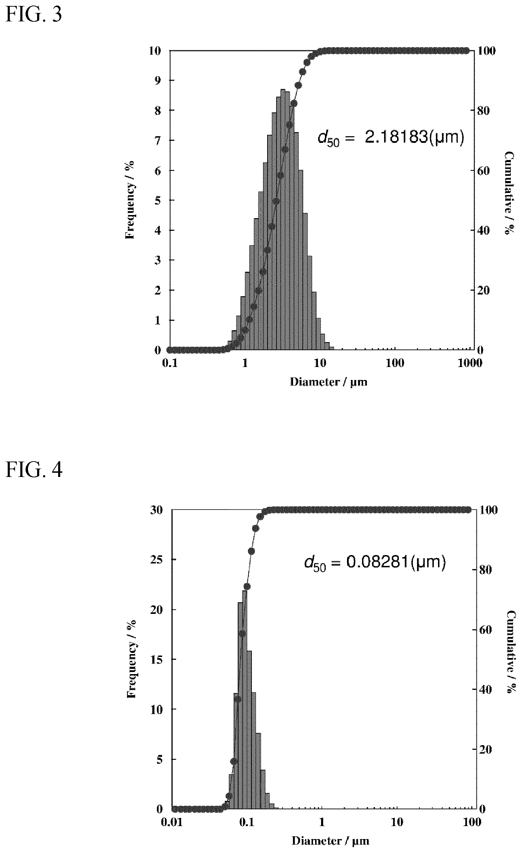

Ethanol was removed from each of the mixed liquids containing the raw material particles X1 and X2, and these particles were washed and recovered, then dried at a temperature of 150°C, and the particle size distribution was measured using a laser diffraction/scattering type particle size distribution measuring apparatus "LA-960V2" (model name) manufactured by HORIBA, Ltd. (see Figs. 3 and 4). The average particle size d₅₀ was 2.182 µm for the raw material particles X1 and 0.083 µm for the raw material particles X2.

### (3) Raw material particles Y1

In accordance with description by Yuki Yamaguchi, J. Ceram. Soc. Jpn., 128 [10] (2020) 747-755, a powder obtained by firing barium zirconate synthesized by a solution method at a temperature of 1300°C for 10 hours in the air atmosphere and then pulverizing the barium zirconate and zirconium oxychloride manufactured by FUJIFILM Wako Pure Chemical Corporation were put in ion-exchanged water and stirred to prepare a barium zirconate particle-containing aqueous solution, and then ammonia water was added dropwise to the aqueous solution and reacted at room temperature, thereby obtaining oxide hydrous gel-coated composite particles made of ZrO₂·nH₂O, which were used as raw material particles Y1. When the particle diameter distribution of the raw material particles Y1 was measured, the average particle diameter d₅₀ was 6.921 µm.

### 2. Production and evaluation of compacts

Each of the raw material particles and the like described above was subjected to uniaxial pressing and cold isostatic pressing to obtain a disk-shaped precursor compact (diameter 20 mm, thickness 0.5 to 1.0 mm), and then immersed in a saturated aqueous solution of barium hydroxide octahydrate to obtain a compact made of a crystal of barium zirconate which is a perovskite-type ceramic. After that, the density of the obtained compact was measured, and the relative density was calculated from the ratio of the measured density to the apparent density (3.869 g/cm³) of the oxide hydrous gel and the theoretical density (6.117 g/cm³) of barium zirconate.

### Experimental Example 1

The raw material particles X2 (oxide hydrous gel particles) in an amount of 0.5 g were subjected to uniaxial pressing (20 kN) and cold isostatic pressing (300 MPa) to obtain a precursor compact (hereinafter, referred to as a "precursor compact P1"). The density of the precursor compact P1 was 2.717 g/cm³, and the relative density was 71.38%.

Subsequently, the precursor compact P1 and 20 g of a saturated aqueous solution of barium hydroxide octahydrate were placed in a container so that the precursor compact was immersed in the saturated aqueous solution, and the container was allowed to stand at a temperature of 100°C for 100 hours under sealed conditions. After that, washing with water and an aqueous acetic acid solution and drying at 150°C in the air atmosphere were performed to obtain a perovskite-type ceramic compact (hereinafter, referred to as "compact Q1") composed of dense barium zirconate crystals. The density of the compact Q1 was 5.138 g/cm³, and the relative density was 84.00% (see Table 1).

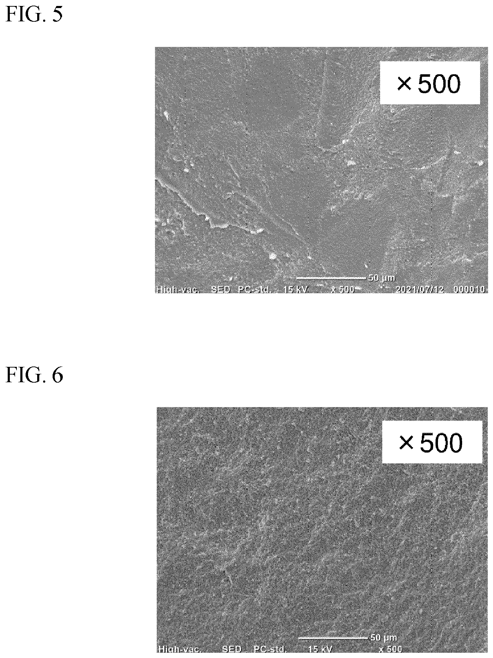

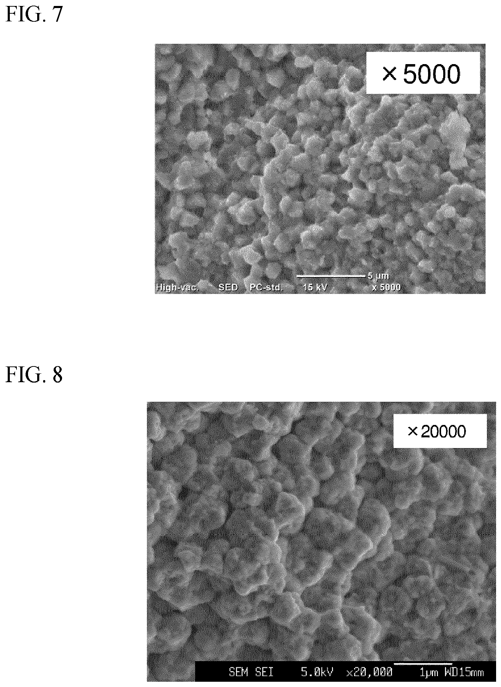

The fracture surface of the precursor compact P1 was observed with a scanning electron microscope, and the image of Fig. 5 was obtained. As can be seen from Fig. 5, the inside of the precursor compact P1 is densely assembled into fine particles and has a smooth structure. The fracture surface of the obtained compact Q1 was observed with a scanning electron microscope, and the images of Figs. 6 and 7 were obtained. As can be seen from Fig. 6, coarse particles, pores, and the like are not present. Fig. 7 is an enlarged image of Fig. 6, and it can be seen from Fig. 7 that a dense compact composed of fine crystals was obtained.

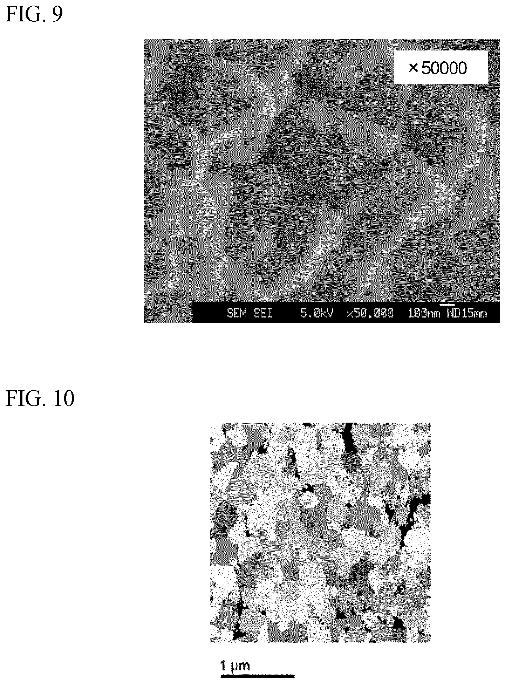

Next, the fracture surface of the compact Q1 was observed with a field emission scanning electron microscope "JSM-6330F" (model name) manufactured by JEOL Ltd., and as a result, Figs. 8 and 9 were obtained. As can be seen from Fig. 9 which is an enlarged view of Fig. 8 that crystal grains having a size of 10 to 100 nm aggregate to form a domain having a size of 0.5 to 10 µm. It can be seen that adjacent domains are connected to each other and have a tertiary hierarchical form. On the other hand, the fracture surface of the compact Q1 was polished to prepare a sample for EBSD measurement, the structure was observed with a thermal field emission scanning electron microscope "JSM-6500F" (model name) manufactured by JEOL Ltd., and the crystal orientation mapping measurement of barium zirconate was performed, and as a result, Fig. 10 was obtained. According to Fig. 10, the crystal grains having a size of 10 to 100 nm observed in Figs. 8 and 9 are aggregated, and the crystal enclosures in the domains having a size of 0.5 to 10 µm to be formed all indicate the same direction, which indicates that the crystal grains having a size of 10 to 100 nm in the domains are oriented and aggregated.

### Experimental Examples 2 to 4

Perovskite-type ceramic compacts (hereinafter, referred to as "compacts Q2 to Q4") were obtained in the same operation as in Experimental Example 1 except that the reaction time (the immersion time of the precursor compact P1 in a saturated aqueous solution of barium hydroxide octahydrate) was set to 12 hours, 50 hours, and 200 hours, respectively, instead of 100 hours. Then, the relative densities of these compacts Q2 to Q4 were calculated (see Table 1).

### Experimental Examples 5 to 8

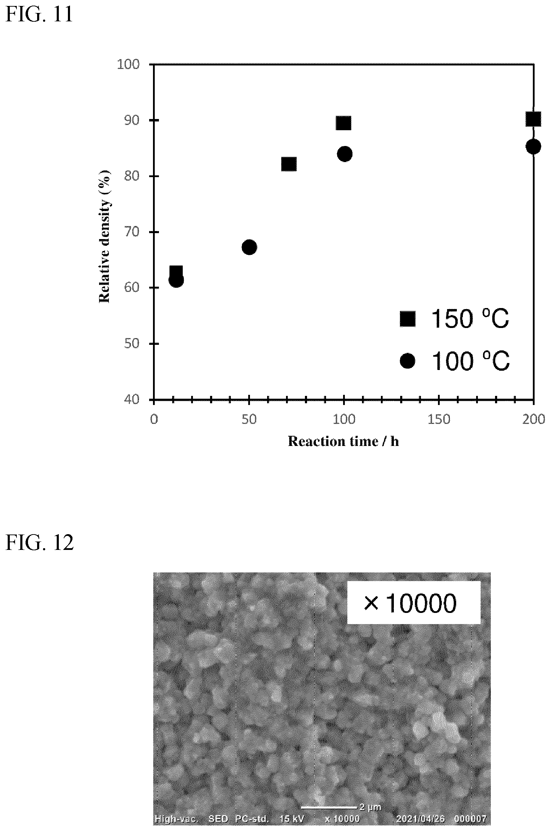

Perovskite-type ceramic compacts (hereinafter, referred to as "compacts Q5 to Q8") were obtained in the same operation as in Experimental Example 1 except that the reaction temperature was set to 150°C instead of 100°C, and the reaction time was set to 12 hours, 70 hours, 100 hours, and 200 hours, respectively. Then, the relative densities of these compacts Q5 to Q8 were calculated (see Table 1 and Fig. 11). When the surface of the obtained compact Q8 was observed with an electron microscope, an image of Fig. 12 was obtained. As can be seen from Fig. 12 that the compact is a dense compact composed of fine crystals.

**Table 1**

| | Reaction time | | | | | Reaction temperature |
|---|---|---|---|---|---|---|
| | 12 hours | 50 hours | 70 hours | 100 hours | 200 hours | |
| Relative density (%) | 61.45 (Compact Q2) | 67.10 (Compact Q3) | - | 84.00 (Compact Q1) | 85.40 (Compact Q4) | 100°C |
| | 62.28 (Compact Q5) | - | 82.10 (Compact Q6) | 89.65 (Compact Q7) | 90.04 (Compact Q8) | 150°C |

### Experimental Example 9

A precursor compact (hereinafter, referred to as "precursor compact P2") was produced in the same operation as in Experimental Example 1 except that the raw material particles X1 (oxide hydrous gel particles) were used instead of the raw material particles X2. The precursor compact was immersed in a saturated aqueous solution of barium hydroxide octahydrate, and then washed and dried, in the same manner as in Experimental Example 1 to obtain a perovskite-type ceramic compact (hereinafter, referred to as "compact R1") composed of dense barium zirconate crystals.

The density of the precursor compact P2 was 2.646 g/cm³, and the relative density was 69.50%. The density of the obtained compact R1 was 4.285 g/cm³ and the relative density was 70.05%.

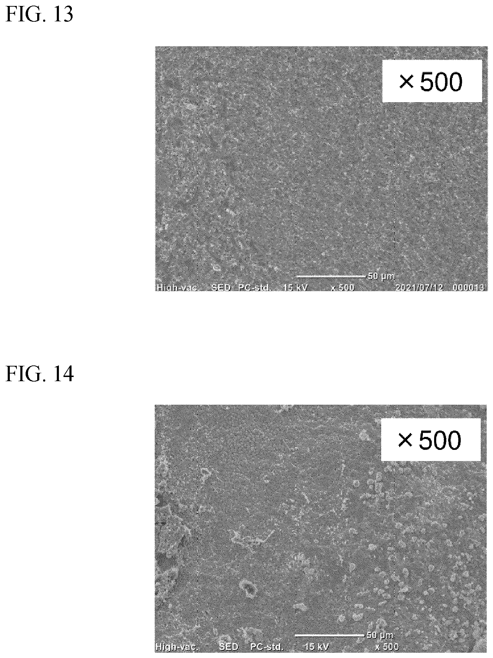

The fracture surface of the precursor compact P2 was observed with an electron microscope, and the image of Fig. 13 was obtained. As can be seen from Fig. 13, large particles and fine particles are mixed in the interior of the precursor compact P2, and these particles are densely assembled to have a smooth structure. The fracture surface of the obtained compact R1 was observed with an electron microscope, and the image of Fig. 14 was obtained. As can be seen from Fig. 14 that the compact is a dense compact composed of fine crystals.

### Experimental Example 10

A precursor compact (hereinafter, referred to as "precursor compact P3") was obtained in the same operation as in Experimental Example 1 except that a mixture of 52.6% by mass of the raw material particles X1 and 47.4% by mass of barium zirconate particles (that are powder particles obtained by pulverizing the compact R1 and performing heat treatment at a temperature of 1300°C for 10 hours in the air atmosphere, average particle diameter d₅₀: 0.969 µm) was used. Subsequently, the precursor compact was immersed in a saturated aqueous solution of barium hydroxide octahydrate, and then washed and dried, in the same manner as in Experimental Example 1, to obtain a perovskite-type ceramic compact (hereinafter, referred to as "compact R2") composed of dense barium zirconate crystals.

The relative density of the precursor compact P3 was 61.25%. The relative density of the obtained compact R2 was 73.80%.

### Experimental Example 11

A precursor compact (hereinafter, referred to as "precursor compact P4") was obtained in the same operation as in Experimental Example 1 except that a mixture of 82.0% by mass of the raw material particles X1 and 18.0% by mass of barium zirconate particles (that are powder particles obtained by pulverizing the compact R1 and performing heat treatment at a temperature of 1300°C for 10 hours in the air atmosphere, average particle diameter d₅₀: 0.969 µm) was used. The precursor compact was immersed in a saturated aqueous solution of barium hydroxide octahydrate, and then washed and dried, in the same manner as in Experimental Example 1 to obtain a perovskite-type ceramic compact (hereinafter, referred to as "compact R3") composed of dense barium zirconate crystals.

The relative density of the precursor compact P4 was 61.39%. The density of the obtained compact R3 was 4.569 g/cm³ and the relative density was 74.69%.

### Experimental Example 12 (Comparative Example)

A precursor compact (hereinafter, referred to as "precursor compact P10") was produced in the same operation as in Experimental Example 1 except that the raw material particles Y1 (composite particles) were used instead of the raw material particles X2. The precursor compact was immersed in a saturated aqueous solution of barium hydroxide octahydrate, and then washed and dried, in the same manner as in Experimental Example 1 to obtain a perovskite-type ceramic compact (hereinafter, referred to as "compact S1") composed of dense barium zirconate crystals.

The density of the precursor compact P10 was 2.579 g/cm³, and the relative density was 53.26%. The density of the obtained compact S1 was 3.291 g/cm³ and the relative density was 53.80%.

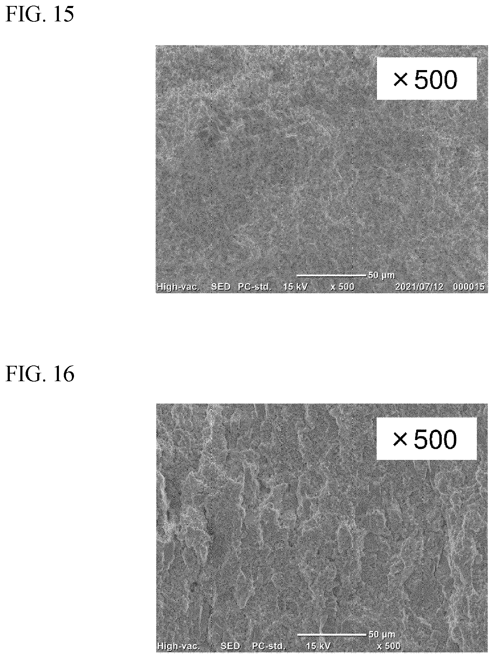

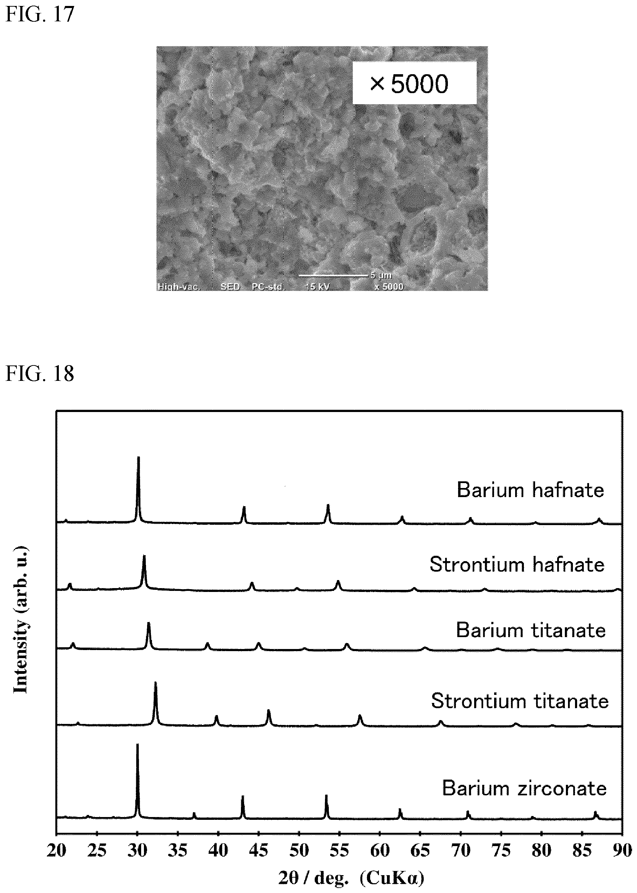

The fracture surface of the precursor compact P10 was observed with an electron microscope, and the image of Fig. 15 was obtained. As can be seen from Fig. 15 that the compact is formed of a rough structure. The surface of the obtained compact S1 was observed with an electron microscope, and the images of Figs. 16 and 17 were obtained. As can be seen from Fig. 16 that the resulting compact is not dense but has a brittle form. Fig. 17 is an enlarged image of Fig. 16, and it can be seen from Fig. 17 that a compact has a large number of pores.

### Experimental Example 13

The same operation as the procedure in Experimental Example 1 was performed at a reaction temperature of 100°C and a reaction time of 12 hours using each precursor compact obtained by using gel particles represented by a general formula M²O₂·nH₂O (wherein M² is at least one element selected from Ti and Hf, and n is a positive number), specifically made of TiO₂·nH₂O or HfO₂·nH₂O, and a hydroxide of strontium or barium. Fig. 18 is an X-ray diffraction pattern of various obtained perovskite-type ceramic compacts. It can be seen from Fig. 18 that strontium titanate, barium titanate, strontium hafnate, and barium hafnate were obtained, similarly to barium zirconate.

### INDUSTRIAL APPLICABILITY

The perovskite-type ceramic compact of the present invention is dense and therefore it can be used for a dielectric for a ceramic capacitor, an electrolyte for a solid oxide fuel cell, an electrolyte for a gas sensor, an electrode or an electrolyte for an all-solid-state battery, a photocatalyst electrode, and the like.

### REFERENCE SIGNS LIST

- 1:: Crystal
- 2:: Domain
- 3:: Another component

## Claims

1. A method for producing a perovskite-type ceramic compact consisting of a perovskite-type ceramic comprising an alkaline earth metal element, at least one element selected from Ti, Zr, and Hf, and oxygen element, **characterized by** comprising a contact reaction process in which a precursor compact comprising singly a gel including water and an oxide of at least one element selected from Ti, Zr, and Hf, and a liquid comprising a hydroxide of the alkaline earth metal element are brought into contact with each other.

2. The method for producing a perovskite-type ceramic compact according to claim 1, wherein the gel is amorphous.

3. The method for producing a perovskite-type ceramic compact according to claim 1 or 2, wherein the precursor compact is a green compact comprising particles consisting of the gel.

4. The method for producing a perovskite-type ceramic compact according to any one of claims 1 to 3, wherein the precursor compact is a green compact of a mixture of particles consisting of the gel and particles consisting of the perovskite-type ceramic.

5. A perovskite-type ceramic compact **characterized in that** an aggregate of perovskite-type ceramic crystals comprising an alkaline earth metal element, at least one element selected from Ti, Zr, and Hf, and oxygen element forms a domain, and the compact comprises a portion formed by connecting a plurality of the domain, the perovskite-type ceramic compact having a relative density of 60% or higher.

6. The perovskite-type ceramic compact according to claim 5, wherein a plurality of the perovskite-type ceramic crystals oriented in a same direction are included in the domains.

7. A raw material for a precursor compact used in the method for producing a perovskite-type ceramic compact according to any one of claims 1 to 4, **characterized by** comprising particles consisting of a gel including water and an oxide of at least one element selected from Ti, Zr, and Hf.

8. The raw material for a precursor compact for producing a perovskite-type ceramic compact according to claim 7, wherein the gel is amorphous.

9. The raw material for a precursor compact for producing a perovskite-type ceramic compact according to claim 7 or 8, wherein an volume average particle diameter of the gel particles is in a range from 0.05 to 10 µm.
